# EUROPEAN PATENT SPECIFICATION

(11) **EP 0 448 088 B1**
(45) Date of publication and mention of the grant of the patent: **11.09.1996**
(21) Application number: 91104367.7
(22) Date of filing: 20.03.1991
(51) Int. Cl.: A47C 3/30, F16F 9/02

(54) **A cylinder piston device**
Zylinderkolbenvorrichtung
Dispositif à cylindre et piston

(30) Priority: 21.03.1990 DE 4009100
(43) Date of publication of application: 25.09.1991
(73) Proprietor: Stabilus GmbH, D-56070 Koblenz (DE)
(72) Inventor: Mintgen, Rolf, W-5441 Thür (DE); Poertzgen, Gregor, W-5400 Koblenz (DE); Heinrichs, Heinz-Josef, Dr., W-5400 Koblenz-Metternich (DE); Knopp, Axel, W-5411 Eitelborn (DE)
(74) Representative: Weickmann, Heinrich, Dipl.-Ing.

(56) References cited:
- EP-A- 0 353 550
- DE-C- 3 818 065

## Description

This invention relates to a cylinder piston device comprising
a cylinder member having an axis, two ends and an internal circumferential face and defining a cylinder cavity,
a piston rod member sealingly guided through at least one of said two ends for axial movement with respect to said cylinder member,
a piston unit fastened to said piston rod member within said cavity, said piston unit dividing said cavity into two working chambers,
a flow passage extending between said two working chambers and including a substantially axial channel within said piston unit, a valve unit allocated to said flow passage for selectively opening and closing said flow passage by control means extending through an axial bore of said piston rod member,
said valve unit including a valve pin at least partially accommodated within a valve pin cavity of said piston rod member and cooperating with a sealing face allocated to said substantially axial channel,
said piston unit being fastened to said piston rod member by a hollow inner end portion of said piston rod member entering into a fastening sleeve of said piston unit which is integral with and projects axially beyond a basic piston member, said terminal portion having a substantially axially directed terminal face inside said fastening sleeve and axially supported by an abutment face of said piston unit, said fastening sleeve being secured against axial separation from said piston rod member, said sealing face being provided by a sealing ring surrounding said substantially axial channel, said sealing ring being accommodated and secured within an annular recess of said basic piston member opening toward an end face thereof remote from said fastening sleeve, an annular sealing arrangement being provided for preventing escape of fluid from said cylinder cavity through said axial bore axially along said valve pin, said flow passage further including an annular flow passage chamber extending around said valve pin,
said annular flow passage chamber being connectable to one of said working chambers through said substantially axial channel and being connected to the other one of said working chambers by a flow passage section extending across wall means of at least one of said piston rod member and said piston unit.

A cylinder piston device of this type is known from US-A-4 784 375.

The piston unit in this known embodiment has a relatively large axial dimension and is less compact than desired. As a result thereof also the cylinder piston device as a whole is less compact than desirable: It is desirable that the total axial length of the cylinder piston device for a given axial length of the stroke of the piston rod member is at a minimum.

It is an object of the present invention to provide a cylinder piston unit of the type as defined above in which the axial dimension of the piston unit and in consequence thereof also the overall axial length of the device is reduced for a given stroke. A further object of the present invention is to provide a cylinder piston device which can be manufactured in a most economic way. A further object of the invention is to provide a connection between the piston rod member and the piston unit, which can be assembled most easily.

Due to the overlapping between said hollow inner end portion of the piston rod member and the sealing arrangement the total axial length of the cylinder piston device at a given axial stroke of the piston rod member can be reduced.

The provision of the abutment face of the piston unit and the support face for the sealing ring as axially opposite faces of the integral ring portion of the piston member helps to manufacturing the cylinder piston device in an economic way.

From EP-A-0 353 550 it is known to provide an axial overlapping between the hollow inner end portion of the piston rod member and the sealing arrangement.

From DE-C-3 818 065 it is known to provide a piston member with both an integral fastening sleeve and an integral ring portion extending radially inward beyond the radial location of the fastening sleeve with this integral ring portion surrounding the axial channel.

In order to obtain a most stable connection between the piston rod member and the piston unit, the piston rod member may have an end face abutting an abutment face of the integral ring portion, which abutment face is substantially perpendicular to the axis of the cylinder piston device. In this embodiment, the flow passage section may extend across both the hollow end portion of the piston rod member and the fastening sleeve.

The flow passage section across the hollow inner end portion of the piston rod member may be obtained in that the end face of the hollow inner end portion of the piston rod member is provided with at least one recess permitting a substantially radial flow across the hollow end portion of the piston rod member. This at least one recess may be e.g. embossed into the end face of the hollow inner end portion of the piston rod member.

Alternatively, the abutment face of the integral ring portion may be provided with at least one recess permitting a substantially radial flow across the hollow inner end portion of the piston rod member. The abutment face may be integral with the integral ring portion. In this case, the at least one recess may be embossed or machined into the body of the piston member. Alternatively, the abutment face with the at least one recess may be provided by a nozzle disc axially inserted between the integral ring portion and the end face of the piston rod member.

In case of a fastening sleeve being provided on the piston unit, the flow passage section across the fastening sleeve may be obtained by at least one substantially radial bore through the fastening sleeve.

The connection between the piston unit and the piston rod member may be obtained in that the fastening sleeve is crimped in a radially inward direction, such as to come in substantially axial engagement with a radially outwards directed flange of the piston rod member. This radially outwards directed flange of the piston rod member may be provided by a ring member accommodated by a radially outer groove of the hollow inner end portion of the piston rod member. This ring member may be shaped such as to define a further annular flow passage chamber together with the fastening sleeve.

The valve pin may be substantially cylindrically shaped for entrance into the axial channel of the piston unit.

The annular sealing arrangement may be provided by at least one sealing ring member engaging both a radially inner face of the valve pin cavity and a radially outer face of the valve pin.

A spacer sleeve may be accommodated within the valve pin cavity. This spacer sleeve may be used either as an axial abutment face for the at least one sealing ring member having sealing engagement with both the piston rod member and the valve pin. Alternatively, this spacer sleeve may also provide an axial abutment face for the valve pin, against which the valve pin can abut in its closing position. According to a further alternative, the spacer sleeve may fulfil both said abutment functions.

The cylinder piston device of the present invention is most easily to be manufactured with a minimum of parts and with a minimum of assembling work. Also, the machining of the components is reduced to a minimum. A hermetic separation between the working chambers and between the cylinder cavity and the surrounding atmosphere is obtained with a minimum of sealing means.

The various features of novelty which characterize the invention are pointed out with particularity in the claims annexed to and forming a part of the disclosure. For a better understanding of the invention, its operating advantages and specific objects attained by its use, reference should be had to the accompanying drawings and descriptive matter in which there is illustrated and described a preferred embodiment of the invention.

### BRIEF DESCRIPTION OF THE DRAWINGS

The invention will be explained in greater detail hereinafter with reference to an embodiment shown in the accompanying drawings, in which
- Fig. 1: is a longitudinal section through the cylinder piston device and
- Fig. 2: is an enlarged sectional view of the area in which the piston unit is connected with the piston rod member.

### DETAILED DESCRIPTION OF THE PREFERRED EMBODIMENT

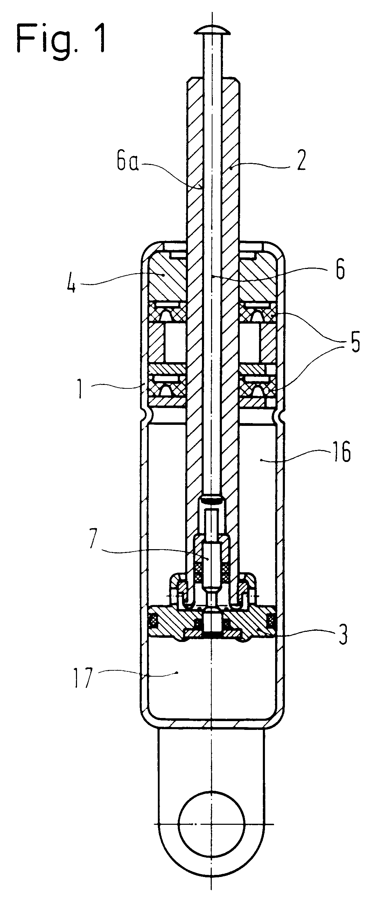

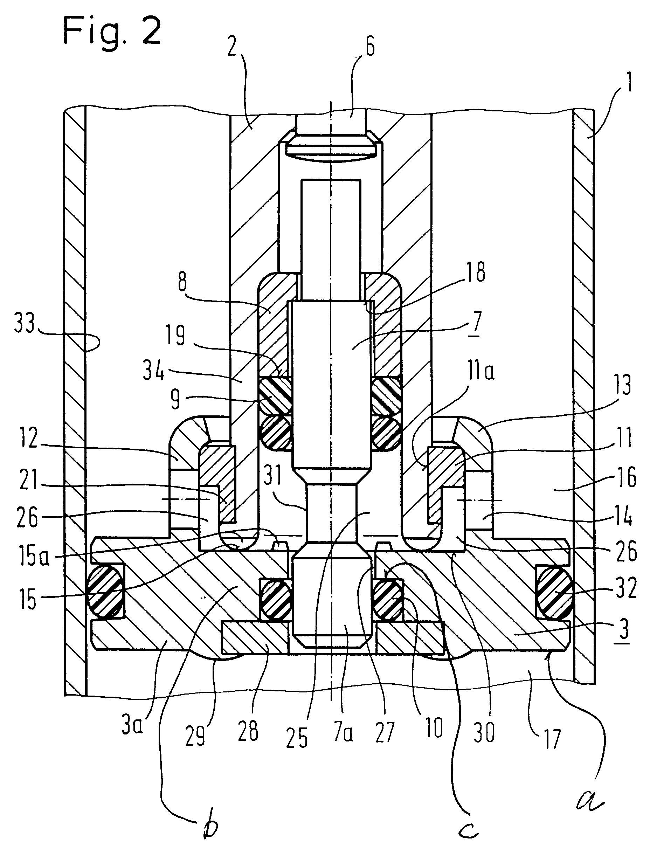

A cylinder piston device, namely a lockable lifting assembly, is shown in Figs. 1 and 2. It comprises a cylinder member 1 in which a piston rod member 2 is connected to a piston unit 3 for common axial movement with respect to the cylinder member 1. Outwardly, the piston rod member 2 is sealed by a piston rod seal 5 and is guided by a piston rod guide 4. In the tubularly constructed piston rod member 2, there is an actuating rod 6 within a bore 6a for actuating a valve pin 7, which is guided in a spacer sleeve 8. In a valve pin cavity 25 of the piston rod member 2 is a sealing arrangement 9, whih consists of two O-rings. The upper O-ring 9 bears against an abutment face 19 formed by the spacer sleeve 8. The valve pin 7 has an upwards directed annular face bearing on an abutment face 18 of the spacer sleeve so that the valve pin 7 is limited in its upward axial movement for defining the closing position. At the bottom end of the piston rod member 2 on the outside, a ring member 11 is fixed within a groove 11a. An upper free end 13 of a fastening sleeve 12 of the piston unit 3 engages the upper end of the ring member 11. Provided at the bottom end face 15 of the piston rod member 2 is a through port 15 formed by a recess. This through port 15 opens from a radially inner flow passage chamber 25a to a radially outer flow passage chamber 26. The radially inner flow passage chamber 25 is connectable with the lower working chamber 17 through an axial channel 27, which accommodates a lower end portion 7a of the valve pin 7. An O-ring 10 is associated to the axial channel 27 for sealing engagement with the lower portion 7a of the valve pin 7. The O-ring 10 ist maintained in its axial position with respect to a support face c by a mounting disc 28 fixed to the piston member 3a by a deformation 29. The support face c is provided by an integral ring portion b of the piston member 3a.

The radially inner flow passage chamber 25 is connected with the radially outer flow passage chamber 26 through the recess 15a embossed into the lower end face 15 of the piston rod member 2. The radially outer flow passage chamber 26 is connected with the working chamber 16 through the radial bores 14. The lower end face 15 of the piston rod member 2 is pressed against an abutment face 30 of the integral ring portion b of the piston unit 3 by the radially inwardly crimped flange 13 through the ring member 11. The ring member 11 may be provided with an axial slit so that it can be elastically inserted into the groove 11a. The ring member 11 is provided with a downward directed projection 21, which faces the radial bores 14 so that a smooth flow is provided from the flow passage chamber 25 through the recesses 15a, the radially outer flow passage chamber 26 and the radial bores 14 to the working chamber 16, when the valve pin 7 is in a downward shifted opening position. The valve pin 7 is provided with an annular groove 31, which can be brought in radial alignment with the O-ring 10 by downward movement of the valve pin 7. Then, the flow passage from the working chamber 17 to the working chamber 16 is open. Downward movement of the valve pin 7 is obtained by downward movement of the actuating rod 6. The piston member 3a is provided with an O-ring 32 engaging an inner circumferential face 33 of the cylinder member 1.

In Fig. 2, the valve pin 7 is in its closed position. The working chambers 17 and 16 are sealingly separated from each other. Escape of pressurized fluid through the bore 6a is prevented by the valve pin 7 engaging the O-rings 9.

The guide ring 8 provides a guiding face and an abutment face 18 for the valve pin 7. It is possible, however, that the valve pin 7 has a certain radial play with respect to the guide ring 8 and with respect to the channel 27 so that even axial misalignment of the piston member 3a and of the piston rod member 2 has no effect on correct operation of the device.

It is to be noted that the embossed recesses 15a at the lower end face 15 of the hollow section 34 of the piston rod member 2 may be replaced by a recess embossed or machined into the abutment face 30 of the piston member 3a. Alternatively, a nozzle disc may be inserted between the lower end face 15 and the abutment face 30. This nozzle disc may be provided with recesses or openings, which provide flow communication between the flow passage chamber 25 and the flow passage chamber 26.

The valve 2 is maintained in its closed position as shown in Fig. 2 by the internal pressure of the fluid within the working chambers 16 and 17. It is to be noted, however, that abutment means may be povided for defining the lower or opening position of the valve pin 7.

The lower end face of the piston member 3a is designated by a.

While a specific embodiment of the invention has been shown and described in detail to illustrate the application of the inventive principles, it will be understood that the invention may be embodied otherwise without departing from such principles.

The reference numerals in the claims are only used for facilitating the understanding and are by no means restrictive.

## Claims

1. A cylinder piston device
comprising
a cylinder member (1) having an axis, two ends and an internal circumferential face (33) and defining a cylinder cavity,
a piston rod member (2) sealingly guided through at least one of said two ends for axial movement with respect to said cylinder member (1),
a piston unit (3) fastened to said piston rod member (2) within said cavity, said piston unit (3) dividing said cavity into two working chambers (16,17),
a flow passage (27,15a,26,14) extending between said two working chambers (16,17) and including a substantially axial channel (27) within said piston unit (3), a valve unit allocated to said flow passage (27,25a,15a,26,14) for selectively opening and closing said flow passage by control means (6) extending through an axial bore (6a) of said piston rod member (2),
said valve unit including a valve pin (7) at least partially accommodated within a valve pin cavity (25) of said piston rod member (2) and cooperating with a sealing face (10) allocated to said substantially axial channel (27),
said piston unit (3) being fastened to said piston rod member (2) by a hollow inner end portion (34) of said piston rod member (2) entering into a fastening sleeve (12) of said piston unit (3) which is integral with and projects axially beyond a basic piston member (3a), said terminal portion (34) having a substantially axially directed terminal face inside said fastening sleeve (12) and axially supported by an abutment face (30) of said piston unit (3), said fastening sleeve (12) being secured against axial separation from said piston rod member (2), said sealing face (10) being provided by a sealing ring (10) surrounding said substantially axial channel (27), said sealing ring (10) being accommodated and secured within an annular recess of said basic piston member (3a) opening toward an end face (a) thereof remote from said fastening sleeve (12), an annular sealing arrangement (9) being provided for preventing escape of fluid from said cylinder cavity through said axial bore (6a) axially along said valve pin (7), said flow passage (27,15a,26,14) further including an annular flow passage chamber (25a) extending around said valve pin (7),
said annular flow passage chamber being connectable to one (17) of said working chambers (16,17) through said substantially axial channel (27) and being connected to the other one (16) of said working chambers (16,17) by a flow passage section (15a,26,14) extending across wall means (34,12) of at least one of said piston rod member (2) and said piston unit (3),
**characterized in**
that said hollow inner end portion (34) of said piston rod member (2) axially overlaps said sealing arrangement (9) and
that said abutment face (30) and a support face (c) of said sealing ring (10) are provided by axially opposite faces of an integral ring portion (b) of said piston member (3a) extending radially inwards beyond the radial location of said fastening sleeve (12) and surrounding said substantially axial channel (27) adjacent said annular flow passage chamber .

2. A cylinder piston device as set forth in claim 1,
said piston rod member (2) having an end face (15) abutting an abutment face (30) of said integral ring portion (b), which abutment face (30) is substantially perpendicular to said axis, said flow passage section (15a,26,14) extending across both said hollow end portion (34) of said piston rod member and said fastening sleeve (12).

3. A cylinder piston device as set forth in claim 2,
said end face (15) of said hollow inner end portion (34) of said piston rod member (2) being provided with at least one recess (15a) permitting a substantially radial flow across said hollow inner end portion (34) of said piston rod member (2).

4. A cylinder piston device as set forth in claim 3,
said at least one recess (15a) being embossed into said end face (15).

5. A cylinder piston device as set forth in claim 2,
said abutment face (30) of said integral ring portion (b) being provided with at least one recess permitting a substantially radial flow across said hollow inner end portion (34) of said piston rod member (2).

6. A cylinder piston device as set forth in claim 5,
said abutment face (30) with said at least one recess being provided by a nozzle disc axially inserted between said integral ring portion (b) and said end face (15) of said piston rod member (2).

7. A cylinder piston device as set forth in one of claims 1-6,
said fastening sleeve (12) being provided with at least one substantially radial bore (14).

8. A cylinder piston device as set forth in one of claims 1-7,
said fastening sleeve (12) being crimped in radially inward direction for substantially axial engagement with a radially outwards directed flange (11) of said piston rod member (2).

9. A cylinder piston device as set forth in claim 8,
said radially outwards directed flange (11) being provided by a ring member (11) accommodated by a radially outer groove (11a) of said hollow inner end portion (34) of said piston rod member (2).

10. A cylinder piston device as set forth in claim 9,
said ring member (11) being shaped such as to define a further annular flow passage chamber (26) together with said fastening sleeve (12).

11. A cylinder piston device as set forth in one of claims 1-10,
said valve pin (7) being substantially cylindrically shaped for entrance into said axial channel (27).

12. A cylinder piston device as set forth in one of claims 1-11,
said annular sealing arrangement (9) being provided by at least one sealing ring member (9) engaging both a radially inner face of said valve pin cavity (25) and a radially outer face of said valve pin (7).

13. A cylinder piston device as set forth in claim 12,
said valve pin cavity (25) accommodating a spacer sleeve (8), said spacer sleeve (8) providing at least one of an axial abutment face 19 for said at least one sealing ring member (9) having sealing engagement with both said piston rod member (2) and said valve pin (7), and an axial abutment face (18) for said valve pin (7) to be abutted by said valve pin (7) in a valve closing position thereof.

## Patentansprüche

1. Zylinderkolbenvorrichtung, umfassend:
ein Zylinderelement (1), das eine Achse, zwei Enden und eine Innenumfangsfläche (33) aufweist und einen Zylinderhohlraum begrenzt,
ein Kolbenstangenelement (2), das zur Axialbewegung relativ zu dem Zylinderelement (1) durch wenigstens eines der zwei Enden abgedichtet geführt ist,
eine Kolbeneinheit (3), die in dem Hohlraum an dem Kolbenstangenelement (2) befestigt ist, wobei die Kolbeneinheit (3) den Hohlraum in zwei Arbeitskammern (16, 17) teilt,
eine Fließpassage (27, 15a, 26, 14), die zwischen den zwei Arbeitskammern (16, 17) verläuft und in der Kolbeneinheit (3) einen im wesentlichen axialen Kanal (27) enthält, wobei der Fließpassage (27, 25a, 15a, 26, 14) eine Ventileinheit zugeordnet ist, um die Fließpassage durch ein Steuermittel (6) wahlweise zu öffnen und zu schließen, das durch eine Axialbohrung (6a) des Kolbenstangenelements (2) verläuft,
wobei die Ventileinheit einen Ventilstift (7) enthält, der wenigstens teilweise in einem Ventilstifthohlraum (25) des Kolbenstangenelements (2) aufgenommen ist, und mit einer Dichtfläche (10) zusammenwirkt, die dem im wesentlichen axialen Kanal (27) zugeordnet ist,
wobei die Kolbeneinheit (3) an dem Kolbenstangenelement (2) durch einen hohlen inneren Endabschnitt (34) des Kolbenstangenelements (2) befestigt ist, der in eine Befestigungsbuchse (12) der Kolbeneinheit (3) eintritt, die mit einem Kolbenhauptelement (3a) einstückig ist und axial über dieses vorsteht, wobei der Endabschnitt (34) in der Befestigungsbuchse (12) eine im wesentlichen axial weisende Endfläche aufweist und axial durch eine Stützfläche (30) der Kolbeneinheit (3) gehalten ist, wobei die Befestigungsbuchse (12) gegen axiale Trennung von dem Kolbenstangenelement (2) gesichert ist, wobei die Dichtfläche (10) durch einen den im wesentlichen axialen Kanal (27) umgebenden Dichtring (10) gebildet ist, wobei der Dichtring (10) in einer Ringausnehmung des Kolbenhauptelements (3a) aufgenommen und gesichert ist, die sich zu dessen von der Befestigungsbuchse (12) abgelegenen Endfläche (a) öffnet, wobei eine ringförmige Dichtungsanordnung (9) vorgesehen ist, um ein Entweichen von Fluid aus dem Zylinderhohlraum durch die Axialbohrung (6a) axial entlang dem Ventilstift (7) zu verhindern, wobei die Fließpassage (27, 15a, 26, 14) ferner eine ringförmige Fließpassagenkammer (25a) beinhaltet, die um den Ventilstift (7) herum verläuft,
wobei die ringförmige Fließpassagenkammer mit einer (17) der Arbeitskammern (16, 17) durch den im wesentlichen axialen Kanal (27) verbindbar ist und mit der anderen (16) der Arbeitskammern (16, 17) durch einen Fließpassagenabschnitt (15a, 26, 14) verbunden ist, der durch Wandmittel (34, 12) des Kolbenstangenelements (2) oder/und der Kolbeneinheit (3) verläuft,
**dadurch gekennzeichnet,**
daß der hohle innere Endabschnitt (34) des Kolbenstangenelements (2) die Dichtungsanordnung (9) axial überlappt und
daß die Stützfläche (30) und eine Tragfläche (c) des Dichtrings (10) durch axial entgegengesetzte Seiten eines einstückigen Ringabschnitts (b) des Kolbenelements (3a) gebildet sind, der über die radiale Stelle der Befestigungsbuchse (12) hinaus radial einwärts verläuft und den im wesentlichen axialen Kanal (27) nahe der ringförmigen Fließpassagenkammer umgibt.

2. Zylinderkolbenvorrichtung nach Anspruch 1, wobei das Kolbenstangenelement (2) eine Endfläche (15) aufweist, die eine Stützfläche (30) des einstückigen Ringabschnitts (b) stützt, wobei die Stützfläche (30) im wesentlichen orthogonal zu der Achse verläuft, wobei der Fließpassagenabschnitt (15a, 26, 14) sowohl durch den hohlen Endabschnitt (34) des Kolbenstangenelements als auch die Befestigungsbuchse (12) verläuft.

3. Zylinderkolbenvorrichtung nach Anspruch 2, wobei die Endfläche (15) des hohlen inneren Endabschnitts (34) des Kolbenstangenelements (2) mit wenigstens einer Ausnehmung (15a) versehen ist, die einen im wesentlichen radialen Fluß durch den hohlen inneren Endabschnitt (34) des Kolbenstangenelements (2) erlaubt.

4. Zylinderkolbenvorrichtung nach Anspruch 3, wobei die wenigstens eine Ausnehmung (15a) in die Endfläche (15) geprägt ist.

5. Zylinderkolbenvorrichtung nach Anspruch 2, wobei die Stützfläche (30) des einstückigen Ringabschnitts (b) mit wenigstens einer Ausnehmung versehen ist, die einen im wesentlichen radialen Fluß durch den hohlen inneren Endabschnitt (34) des Kolbenstangenelements (2) erlaubt.

6. Zylinderkolbenvorrichtung nach Anspruch 5, wobei die Stützfläche (30) mit der wenigstens einen Ausnehmung durch eine Düsenscheibe gebildet ist, die axial zwischen den einstückigen Ringabschnitt (b) und die Endfläche (15) des Kolbenstangenelements (2) eingesetzt ist.

7. Zylinderkolbenvorrichtung nach einem der Ansprüche 1 bis 6, wobei die Befestigungsbuchse (12) mit wenigstens einer im wesentlichen radialen Bohrung (14) versehen ist.

8. Zylinderkolbenvorrichtung nach einem der Ansprüche 1 bis 7, wobei die Befestigungsbuchse (12) zum im wesentlichen axialen Eingriff mit einem radial auswärts weisenden Flansch (11) des Kolbenstangenelements (2) in Richtung radial einwärts umgebogen ist.

9. Zylinderkolbenvorrichtung nach Anspruch 8, wobei der radial auswärts weisende Flansch (11) durch ein Ringelement (11) gebildet ist, das von einer radial äußeren Nut (11a) des hohlen inneren Endabschnitts (34) des Kolbenstangenelements (2) aufgenommen ist.

10. Zylinderkolbenvorrichtung nach Anspruch 9, wobei das Ringelement (11) derart geformt ist, daß es zusammen mit der Befestigungsbuchse (12) eine weitere ringförmige Fließpassagenkammer (26) begrenzt.

11. Zylinderkolbenvorrichtung nach einem der Ansprüche 1 - 10, wobei der Ventilstift (7) zum Eintritt in den axialen Kanal (27) im wesentlichen zylindrisch geformt ist.

12. Zylinderkolbenvorrichtung nach einem der Ansprüche 1 - 11, wobei die ringförmige Dichtungsanordnung (9) durch wenigstens ein Dichtringelement (9) gebildet ist, das sowohl eine radiale Innenfläche des Ventilstifthohlraums (25) als auch eine radiale Außenfläche des Ventilstifts (7) angreift.

13. Zylinderkolbenvorrichtung nach Anspruch 12, wobei der Ventilstifthohlraum (25) eine Abstandshalterbuchse (8) aufnimmt, wobei die Abstandshalterbuchse (8) eine axiale Stützfläche (19) für das wenigstens eine Dichtringelement (9), das sowohl das Kolbenstangenelement (2) als auch den Ventilstift (7) dichtend angreift, oder/und eine axiale Stützfläche (18) für den Ventilstift (7) zum Anstützen des Ventilstifts (7) in dessen Ventilschließstellung bildet.

## Revendications

1. Dispositif à piston et cylindre, comprenant :
un élément formant cylindre (1) ayant un axe, deux extrémités et une face périphérique intérieure (33), et définissant une cavité de cylindre,
un élément formant tige de piston (2) guidé hermétiquement à travers au moins l'une desdites deux extrémités pour suivre un mouvement axial par rapport audit élément formant cylindre (1),
une unité à piston (3) rattachée audit élément formant tige de piston (2) à l'intérieur de ladite cavité, ladite unité à piston (3) divisant ladite cavité en deux chambres de travail (16, 17),
un passage d'écoulement (27, 15a, 26, 14) s'étendant entre lesdites deux chambres de travail (16, 17) et comprenant un canal substantiellement axial (27) à l'intérieur de ladite unité à piston (3), une unité à soupape associée audit passage d'écoulement (27, 25a, 15a, 26, 14) pour ouvrir et fermer sélectivement ledit passage d'écoulement par des moyens de commande (6) s'étendant à travers un perçage axial (6a) dudit élément formant tige de piston (2),
ladite unité à soupape comprenant une broche de soupape (7) logée au moins partiellement dans une cavité de broche de soupape (25) dudit élément formant tige de piston (2) et coopérant avec une face d'étanchéité (10) associée audit canal substantiellement axial (27),
ladite unité à piston (3) étant fixée audit élément formant tige de piston (2) par une partie d'extrémité intérieure creuse (34) dudit élément formant tige de piston (2) entrant dans une douille de fixation (12) de ladite unité à piston (3) qui est solidaire d'un élément formant piston de base (3a) et forme saillie axiale au-delà de celui-ci, ladite partie d'extrémité (34) ayant une face terminale tournée substantiellement dans le sens axial à l'intérieur de ladite douille (12) et soutenue dans le sens axial par une face de butée (30) de ladite unité à piston (3), ladite douille de fixation (12) étant fixée contre une séparation axiale depuis ledit élément formant tige de piston (2), ladite face d'étanchéité (10) étant munie d'une bague d'étanchéité (10) entourant ledit canal substantiellement axial (27), ladite bague d'étanchéité (10) étant logée et fixée dans un renfoncement annulaire dudit élément formant piston de base (3a) s'ouvrant en direction d'une face d'extrémité (a) de celui-ci distante de ladite douille de fixation (12), un dispositif d'étanchéité annulaire (9) étant prévu pour empêcher toute fuite de fluide depuis ladite cavité de cylindre par ledit perçage axial (6a) dans le sens axial le long de ladite broche de soupape (7), ledit passage d'écoulement (27, 15a, 26, 14) comprenant de plus une chambre de passage d'écoulement annulaire (25a) s'étendant autour de ladite broche de soupape (7),
ladite chambre de passage d'écoulement annulaire pouvant être connectée à l'une (17) desdites chambres de travail (16, 17) par l'intermédiaire dudit canal substantiellement axial (27) et étant connectée à l'autre (16) desdites chambres de travail (16, 17) par une section de passage d'écoulement (15a, 26, 14) au travers de moyens formant paroi (34, 12) dudit au moins un élément parmi ledit élément formant tige de piston (2) et ladite unité à piston (3),
caractérisé en ce que
ladite partie d'extrémité intérieure creuse (34) dudit élément formant tige de piston (2) recouvre dans le sens axial ledit dispositif d'étanchéité (9), et
en ce que ladite face de butée (30) et une face de soutien (c) de ladite bague d'étanchéité (10) sont fournies par des faces opposées dans le sens axial d'une partie annulaire solidaire (b) dudit élément formant piston (3a) s'étendant vers l'intérieur dans le sens radial au-delà de l'emplacement radial de ladite douille de fixation (12) et entourant ledit canal substantiellement axial (27) à proximité de ladite chambre d'écoulement annulaire.

2. Dispositif à piston et cylindre selon la revendication 1, ledit élément formant tige de piston (2) ayant une face d'extrémité (15) butant contre une face de butée (30) de ladite partie annulaire solidaire (b), laquelle face de butée (30) est sensiblement perpendiculaire audit axe, ladite section de passage d'écoulement (15a, 26, 14) s'étendant au travers, à la fois, de ladite partie d'extrémité creuse (34) dudit élément formant tige de piston et de ladite douille de fixation (12).

3. Dispositif à piston et cylindre selon la revendication 2, ladite face d'extrémité (15) de ladite partie d'extrémité intérieure creuse (34) dudit élément formant tige de piston (2) étant munie d'au moins un renfoncement (15a) permettant un écoulement substantiellement radial à travers ladite partie d'extrémité intérieure creuse (34) dudit élément formant tige de piston (2).

4. Dispositif à piston et cylindre selon la revendication 3, ledit au moins un renfoncement (15a) étant repoussé dans ladite face d'extrémité (15).

5. Dispositif à piston et cylindre selon la revendication 2, ladite face de butée (30) de ladite partie annulaire solidaire (b) étant munie d'au moins un renfoncement permettant un écoulement substantiellement radial à travers ladite partie d'extrémité intérieure creuse (34) dudit élément formant tige de piston (2).

6. Dispositif à piston et cylindre selon la revendication 5, ladite face de butée (30) avec ledit au moins un renfoncement étant apportée par un disque d'injecteur inséré dans le sens axial entre ladite partie annulaire solidaire (b) et ladite face d'extrémité (15) dudit élément formant tige de piston (2).

7. Dispositif à piston et cylindre selon l'une des revendications 1 à 6, ladite douille de fixation (12) étant munie d'au moins un perçage substantiellement radial (14).

8. Dispositif à piston et cylindre selon l'une des revendications 1 à 7, ladite douille de fixation (12) étant sertie dans une direction intérieure dans le sens radial pour se mettre en prise substantiellement axiale avec une bride (11) tournée radialement vers l'extérieur dudit élément formant tige de piston (2).

9. Dispositif à piston et cylindre selon la revendication 8, ladite bride (11) tournée radialement vers l'extérieur étant apportée par un élément annulaire (11) logé dans une rainure (11a) radialement extérieure de ladite partie d'extrémité intérieure creuse (34) dudit élément formant tige de piston (2).

10. Dispositif à piston et cylindre selon la revendication 9, ledit élément annulaire (11) étant formé de manière à définir une autre chambre de passage d'écoulement annulaire (26) avec ladite douille de fixation (12).

11. Dispositif à piston et cylindre selon l'une des revendications 1 à 10, ladite broche de soupape (7) étant de forme substantiellement cylindrique pour pénétrer dans ledit canal axial (27).

12. Dispositif à piston et cylindre selon l'une des revendications 1 à 11, ledit dispositif d'étanchéité annulaire (9) étant apporté par au moins un élément d'étanchéité annulaire (9) en contact à la fois avec une face radialement intérieure, de ladite cavité de broche de soupape (25) et avec une face radialement extérieure de ladite broche de soupape (7).

13. Dispositif à piston et cylindre selon la revendication 12, ladite cavité de broche de soupape (25) recevant une douille d'espacement (8), ladite douille d'espacement (8) fournissant au moins une face de butée axiale (19) pour ledit au moins un élément annulaire d'étanchéité (9) en prise d'étanchéité avec à la fois ledit élément formant tige de piston (2) et ladite broche de soupape (7), et une face de butée axiale (18) pour ladite broche de soupape (7), devant être mise en butée par ladite broche de soupape (7), dans une position de fermeture de soupape de celle-ci.
